# EUROPEAN PATENT SPECIFICATION

(11) **EP 3 722 208 B1**
(45) Date of publication and mention of the grant of the patent: **25.01.2023**
(21) Application number: 20382250.7
(22) Date of filing: 31.03.2020
(51) Int. Cl.: B64C 39/08, B64C 3/50, B64C 3/44

(54) **POWERED HIGH-LIFT SYSTEM FOR SHORT TAKE-OFF AND LANDING (STOL) AIR VEHICLES**
AKTIVES HOCHAUFTRIEBSSYSTEM FÜR KURZ STARTENDE UND LANDENDE (STOL) LUFTFAHRZEUGE
SYSTÈME HYPERSUSTENTATEUR ACTIVE POUR VÉHICULES AÉRIENS À DÉCOLLAGE ET ATTERRISSAGE COURT (STOL)

(30) Priority: 01.04.2019 ES 201900053 U
(43) Date of publication of application: 14.10.2020
(73) Proprietor: Airbus Defence and Space, S.A.U., 28906 Getafe - Madrid (ES)
(72) Inventor: ALONSO RODRÍGUEZ, Jose Manuel, 28906 Getafe (ES); FUENTES SOLANA, Alfonso Emilio, 28906 Getafe (ES)
(74) Representative: Elzaburu S.L.P.

(56) References cited:
- RO-A2- 133 878
- RO-A2- 134 043
- US-A- 5 374 010

## Description

### Field of the invention

The present invention relates to an aerodynamic configuration of propellers and high-lift systems which allow high lift forces to be produced at very low speeds. The invention is designed for use on STOL (Short Take-off and Landing) aircraft.

### Prior art

For the short and vertical take-off and landing of aircraft conventionally rotor blades have been used. These have the drawback that the cruising speed is limited by the blade tip speed of the propellers.

In the case of fixed wings, moreover, active or passive devices or techniques are used to operate over short distances:
- Passive high-lift devices: flaps, slats, slots and vortex generators.
- Active high-lift techniques: Boundary layer blowing and suction in order to delay and control the loss; and circulation generation and control.

It is known that, in order to increase the lift of a wing, it is required to increase the speed of the air circulating above the upper surface or extrados.

Moreover, it is also known that a propulsion element situated above the upper surface or extrados of a wing accelerates the air upstream of its position, so that the static pressure above the wing surface in this zone decreases and the lift in this wing zone increases.

On the other hand, downstream of the propulsion element, the stagnation pressure increases because energy is imparted to the air. For this reason, although the speed of the flow increases, the static pressure assumes a value close to the pressure existing above the lower surface or intrados of the wing in this zone and it appears at first sight that a small amount of lift may be obtained downstream of the propulsion element.

For this reason, some known devices which are designed to generate an extra forced circulation have placed the propulsion elements on the leading edge of the wing, as in the case of the Custer channel wing described, for example, in US patent No. 2005/0029396 relating to a blowing mechanism for controlling the wake of the propeller, namely, the air flow which passes through the propeller disc.

Although these systems, which are claimed to generate extra forced circulation, are based on ducted fans with a small total cross-sectional area compared to the area of the planform, the propulsion efficiency is small at low flying speeds, due to the fact that the speed of the wake air must be very high. Therefore, the power required to fly at a low speed is too high.

When these systems, which are claimed to generate an extra forced circulation, use large-diameter propulsion elements (propellers), the total front area of which is comparable to half the area of the wing planform, the position of the propulsion plane, namely of the plane which includes the blades of the propeller, is usually situated on the trailing edge of the wing or close to it. In this situation it is difficult to control the lift. These systems accelerate the flow on the wing suction side, namely on the extrados, sucking the air from the trailing edge. Due to this set-back position, a loss rapidly appears in the region of the leading edge when the angle of attack increases, such that the lift force which can be achieved is limited.

It is known document US5374010 disclosing a vertical lift and short takeoff airplane achieving a powered lift which is generated by deflecting downward on the order of nearly 90 DEG the slipstream from the driven propellors by means of the wing flap system of the airplane.

It is also known document RO133878 disclosing an aircraft and a propelling system using the control exerted on a variable-shape aerodynamic surface in order to perform vertical and/or short takeoff and landing. According to the invention, the aircraft has four propelling systems, two symmetrically arranged at the front side and two arranged at the rear side, such that the air flows produced at the front side do not interfere directly with the air flows produced at the rear side. The propelling systems being fixed on a fuselage with aerodynamic shape, which contains a cockpit for pilots, passengers and goods and accommodates the power source for supplying some electric motors, in the vertical takeoff and landing position the fuselage resting on at least one retractable wheel, fixed at the front side and on two retractable wheels, fixed at the rear side, each propelling system having a wing containing a flexible flap which can deflect the air jet by 90° in order to perform the vertical take-off and landing.

### Summary of the invention

The invention falls within the sector of active high-lift systems and uses a technique based on the generation and control of the aerodynamic flow around the longitudinal sections of the wing.

The active high-lift system for aircraft according to the invention comprises:
- a biplane wing which comprises a main lift surface and a secondary lift surface, each one of the lift surfaces comprising a leading edge, a trailing edge, an extrados and an intrados and where:
   - the extrados of the main lift surface is arranged facing the intrados of the secondary lift surface,
   - the main lift surface comprises a high-lift device located on the trailing edge and comprising a surface which is curved towards the intrados of said main lift surface along the direction of the chord of the main lift surface,
   - the secondary lift surface comprises a hinged flow control element located on the trailing edge and designed to rotate around a hinging axis situated along the direction of the wingspan of the secondary lift surface,
- a set of motorized propulsion elements, where each motorized propulsion element comprises a motor and a propeller and is situated above the extrados of the main lift surface, namely, attached to the extrados, downstream of the leading edge of the main lift surface and upstream of the leading edge of the secondary lift surface so that the secondary lift surface is configured to be immersed within the wake of the propellers.

The characteristic features of the control elements and the high-lift devices and the possible arrangement of other additional or alternative elements depend on the operation of the aircraft which uses the high-lift system according to the invention.

In particular, preferably, the main lift surface may comprise a leading-edge high-lift device, for example of the slat type, which will prevent the possible detachment of the fluid layer in the zone close to the leading edge in maximum aerodynamic flow conditions, thus achieving an additional increase in the lift.

If the aircraft, in addition to a high lift at a very low speed, must move with a relatively high speed, where the asymptotic flow in itself has a sufficient dynamic pressure, then the lift coefficient necessary for flying will be small and similar to the remainder of the existing aircraft with a similar weight and wingspan. In this situation the effect of some of the high-lift elements must be eliminated in order to decrease the aerodynamic flow around the sections of the biplane wing.

In particular, preferably, the high-lift devices of the main lift surface may be retractable and kept extended only during the low-speed flying phases.

The present invention also relates to a short take-off and landing aircraft which comprises an active high-lift system according to the invention.

### Technical problems solved by the invention

When an aircraft is flying at low speed, it is difficult to achieve the necessary aerodynamic forces above the conventional control surfaces, such as flight-control ailerons and rudders. This is due to the low dynamic pressure of the external flow. However, it is possible to generate considerable forces within the propeller wake, where the dynamic pressure is greater. The invention solves the problem of low-speed flight control by means of control devices located within the wakes of the propellers, so as to obtain the required control forces.

Specifically, the system according to the invention solves the following problems:
- Take-of at very low speed and over very short distances.
- Reaching competitive cruising speeds.
- Performing low-speed approach and landing manoeuvres.

The invention achieves at low speed high lift levels present in three zones:
- The front zone of the main lift surface, owing to the suction which is produced by the propellers and which increases the air speed and lowers the static pressure.
- The secondary lift surface which lies within the wake of the propellers where the flow has a dynamic pressure sufficient to produce significant aerodynamic forces.
- The high-lift device which extends behind the main lift surface. Above the upper part of this extension the high dynamic pressure flow adheres as result of what is known as the "Coand 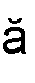 effect".

Therefore, the thrust produces a supercirculation around the biplane wing which is controlled by operating the aerodynamic control surfaces.

### Functions of the control elements

The existence and the arrangement of the trailing-edge high-lift device of the main lift surface is important in low-speed flying conditions. Above the upper surface of this element, which extends the upper surface of the main lift surface, the flow which passes across the channel present between lift surfaces adheres as a result of the Coand 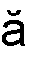 effect. This effect increases the trailing-edge angle of the wake flow with respect to the undisturbed flow and, therefore, increases the lift of the biplane wing, owing to the increase in the aerodynamic circulation.

The trailing-edge angle of the wake flow may be controlled by means of deflection of the hinged element for controlling the trailing-edge flow of the secondary lift surface. A constriction of the channel outlet at low speed produces a kickdown angle or flattening of the flow above the extension of the extrados of the main lift surface. In these circumstances, the Coand 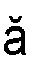 effect and the lift of the assembly increases significantly. Therefore, this hinged trailing-edge element of the upper lift surface is the main direct control for the lift of the biplane wing.

### Advantages of the invention

The advantages of the system according to the invention are as follows:
- High lift levels are achieved.
- The thrust and the lift may be independently controlled. In certain given flying conditions, the thrust depends on the propeller, while the lift which is obtained, with a given thrust value, depends both on the angle of attack and on the deflection of the control elements.
- It is possible to fly at low speed with high angles of attack.

An aircraft equipped with the high-lift system according to the invention has a maximum number of cruising Mach in the region of M=0.55. This value is less than that which can be achieved in aircraft with pusher propellers situated both at the front of and at the rear of the wing (tractor and pusher configurations). However this speed is much higher than the speed which can be reached by aircraft with rotary blades.

This limitation arises from the fact that, in a wing flying at Mach = 0.55, on its extrados in the position of the propeller, the speed of the flow is about M=0.60-0.65.

The invention therefore allows the aircraft in which it is installed to perform flights at low speed and reach competitive cruising speeds (M>0.5), higher than the cruising speeds of the solutions based on rotary blades.

The invention produces, with a thrust/weight ratio similar to that of conventional fixed-wing aircraft, the necessary lift for balancing the weight at a significantly lower speed. Therefore, the take-off distances and times are shortened significantly with the invention compared to those of conventional fixed-wing aircraft with active or passive high-lift devices.

### Description of the figures

In order to complete the description and with the aim of facilitating better understanding of the invention, a number of figures are provided. Said figures form an integral part of the description and illustrate an example of embodiment of the invention.
Figure 1 shows a schematic perspective view of a portion of a biplane wing which comprises four propellers and a high-lift system according to an example of embodiment of the invention.
Figure 2 shows a schematic side view of the example of embodiment in a configuration suitable for low-speed flying.
Figure 3 shows a schematic side view of the example of embodiment corresponding to Figure 1 in a configuration suitable for flying at cruising speed.
Figure 4 shows the distribution of the pressure coefficient above the surfaces of the biplane elements.
Figure 5 shows a schematic side view of an example of embodiment of a front control surface of the secondary lift surface.
Figure 6 shows a schematic side view of an example of embodiment of the rear high-lift device of the primary lift surface.
Figure 7 shows a schematic side view of the fluid field flow lines calculated using a simplified two-dimensional code, present around an example of embodiment of the high-lift system in a condition where there is maximum lift at a very low speed.
Figure 8 shows a schematic perspective view of an example of embodiment of a short take-off and landing aircraft which comprises an example of embodiment of an active high-lift system.

### Detailed description of the invention

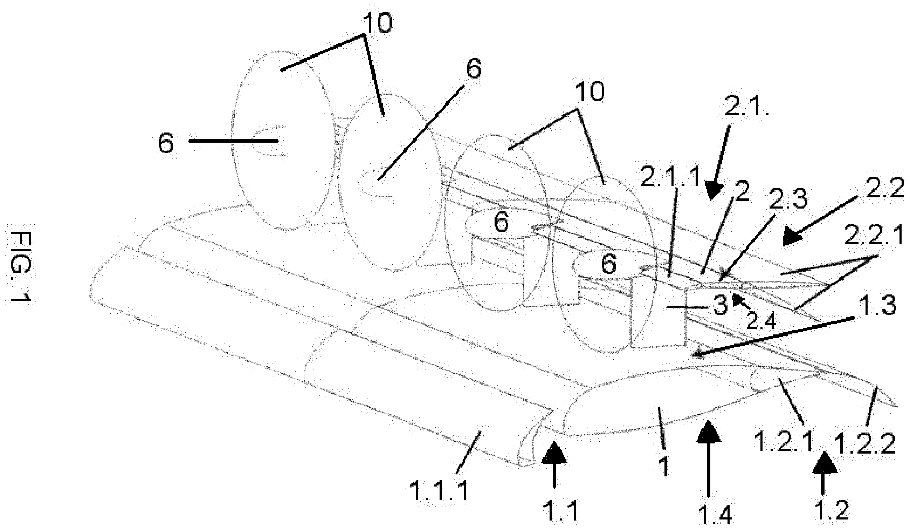

As can be seen in the examples of embodiment shown in Figures 1, 2 and 3, the invention consists of two lift surfaces (1, 2) which in this example of embodiment are joined together by means of pylons (3) and a series of motorized propulsion elements (6, 10) which in this example of embodiment are also mounted on the same pylons (3).

The motorized propulsion elements (6, 10) can be joined together with the main lift surface (1) or the secondary lift surface (2) or both of them (1, 2) by means of pylons (3).

The secondary lift surface (2) has, preferably, a smaller thickness than the main lift surface (1) owing to the fact that it is immersed within the flow of the propeller (10).

The motorized propulsion elements (6, 10) are situated on top of the main lift surface (1), basically on top of the extrados (1.3) and at the front of the secondary lift surface (2). As a result the secondary lift surface (2) is immersed within the wake of the propellers (10).

The high-lift device (1.2.2) on the trailing edge (1.2) of the main surface (1) is configured to be movable between a first extended position in which it is active and a second position in which it is retracted and inactive. It is a device which changes configuration between the take-off/landing and high-speed flying phases and therefore is not an instantaneous flight control device. Alternatively, it could maintain any intermediate fixed position between the extended and retracted positions.

The high-lift device (1.2.2) extends behind the upper surface of the main lift surface (1), with a curved surface bending gently downwards, namely it comprises a form curved in the opposite sense to the secondary lift surface (2). This flow control element (1.2.2) will be extended during low-speed flying conditions and retracted during high-speed flying, for example, being extended telescopically extended from the trailing edge (1.2). When it is extended, the lift of the biplane is increased significantly.

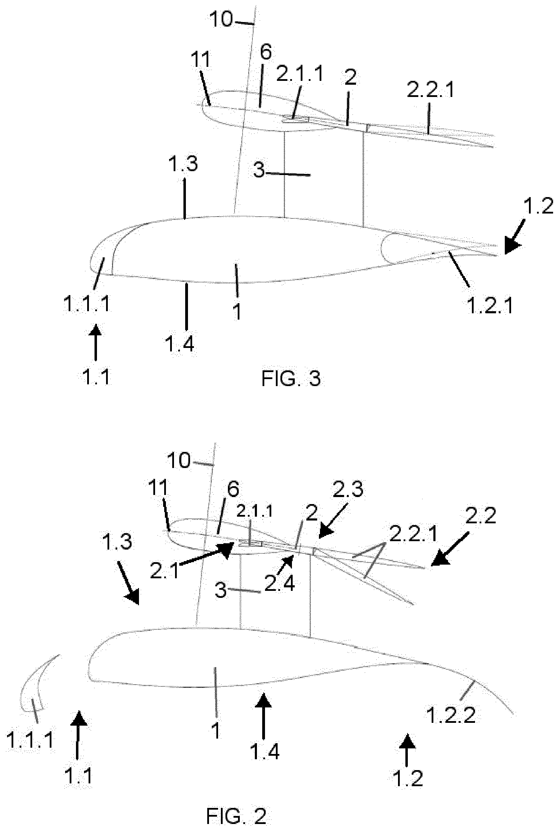

Additionally, in the example of embodiment shown in the figures, the main lift surface (1) comprises a second high-lift device (1.1.1) on the front or leading edge zone (1.1) of the main lift element (1). In the example of embodiment, this high-lift device (1.1.1) is of the slotted type and movable between a first extended position in which a slot is formed between the high-lift device (1.1.1) and the main lift surface (1), said slot connecting the intrados (1.4) and the extrados (1.3), and a second position in which the high-lift device (1.1.1) is retracted onto the main lift surface (1) and said slot is not present. This high-lift device (1.1.1) which exists in this example of embodiment will be extended during the low-speed flying phases and retracted during the high-speed flying phases. In Figures 1 and 2 this element is shown extended, while in Figure 3 this element is retracted.

This high-lift device (1.1.1) on the leading edge (1.1) changes its aerodynamic configuration between the take-off/landing and high-speed flying phases and therefore it is not an instantaneous flight control device.

On the main lift surface (1), if present, the high-lift device (1.1.1) of the leading edge (1.1) will be preferably of the slotted movable slat type as shown in Figures 1 to 3, although it could be without a slot, such as a non-slotted slat or "leading edge flap".

If it is not present, the form of the leading edge (1.1) of the profile of the main lift surface (1) comprises a form of the leading edge (1.1) which is curved towards the intrados (1.4) of the main lift surface (1), namely it will have a mean camber dropping downwards towards the intrados (1.4), referred to as "drooped nose", or it could also have an adaptive "morphing droop nose" which would adopt the drooped nose form in high-lift flight conditions.

The existence and realization of a high-lift device (1.1.1), for example, of the slotted slat type, on the leading edge (1.1) of the main lift surface (1) is important in low-speed flying conditions when it is required to achieve a very high lift. Its function is to prevent detachment of the fluid layer which could occur in high-lift conditions if it were not extended, owing to the high edging speed when the flow passes from the intrados (1.4) to the extrados (1.3) around the leading edge (1.1) of the main lift surface (1).

Additionally, the main lift surface (1) of the example of embodiment has in its rear zone close to the trailing edge (1.2) a non-slotted control element (1.2.1) which is hinged and adapted to rotate about a hinging axis along the direction of the wingspan of the main lift surface (1) and is located upstream of the high-lift device (1.2). This control element is not an essential characteristic feature of the invention, but could either replace a portion of the wingspan or could be present along the whole width thereof together with the high-lift element (1.2.2). Operation thereof, together with operation of other control elements, would serve to control the local lift in high-speed conditions where the high-lift element (1.2.2) which extends the extrados (1.3) of the main lift surface (1) is retracted.

The flow control element (2.2.1) on the trailing edge (2.2) of the secondary lift surface (2), when deflected, throttles the flow which passes through the channel present between the two lift surfaces (1, 2) and flattens the flow above the extrados (1.3) of the main lift surface (1) or its high-lift device (1.2.2). This thus controls the efficiency of the Coand 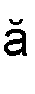 effect and the trailing-edge angle of the flow with respect to the asymptotic flow and therefore the value of the aerodynamic flow. This assumes direct implementation in the lift force of the biplane wing so that this element is the main instantaneous flight control element. Figure 2 shows in schematic form the implementation of the flow control element (2.2.1) in a low speed condition.

In high-speed flying conditions, the axial flow entering the propeller (10) must be sufficiently uniform to prevent the formation of major cyclical forces in the blades and the associated structural problems. This may be one of the possible reasons for the presence of the non-slotted control element (1.2.1).

In the case where there is a non-slotted control element (1.2.1) on the trailing edge (1.2) of the main lift surface (1), its angular displacement performed together with the deflection of the flow control element (2.2.1) of the trailing edge (2.2) of the upper lift surface (2) may act on the lift force without affecting the axial flow conditions at the inlet of the propeller (10), if the movements are coordinated such that the exit area of the channel present between the elements (1,2) is maintained. Therefore, the coordinated deflection of both elements (1.2.1, 2.2.1) may orient the direction of the flow at the exit of the channel present between the two lift surfaces (1,2), by operating directly on the value of the lift force of the biplane wing, keeping unchanged the uniform conditions at the inlet of the propeller (10), which could be necessary to control the lift in high speed conditions. This condition is schematically shown in Figure 3.

Figure 1 shows in schematic form the flow control element (1.2.1) and the high-lift device (1.2.2) of the trailing edge of the main lift surface (1). Figure 2 shows the high-lift device (1.2.2), while Figure 3 shows in schematic form the flow control element (1.2.1).

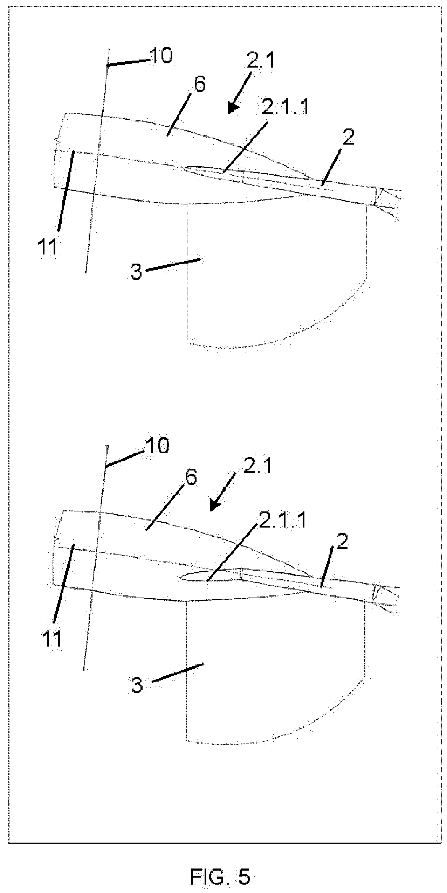

In the example of embodiment shown in the figures, for example, in Figure 5, the secondary lift surface (2) comprises a hinged flow control element (2.1.1) which is located on the leading edge (2.1) and is adapted to rotate about a hinging axis located in the direction of the wingspan of the secondary lift surface (2). The front flow control element (2.2.1) normally will be deflected angularly together with the deflection of the rear flow control element (2.2.1) so as to ensure that the flow layer adheres to the extrados (2.3) of the secondary lift surface (2). In accordance with the above, its angular movement will probably be associated with the deflection of the flow control element (2.2.1) on the trailing edge (2.2) of the same lift surface (2), which is the main element for directly controlling the lift of the biplane wing.

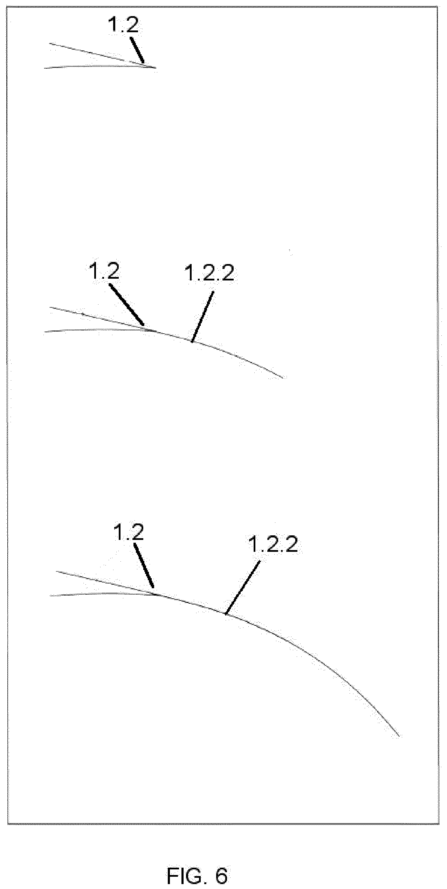

Figure 6 includes an example of embodiment of the high-lift device (1.2.2) on the trailing edge (1.2) of the main lift surface (1) which is retractable relative to the trailing edge (1.2) being telescopically extended therefrom (1.2).

The high-lift device (1.2.2) which extends from the trailing edge (1.2) of the main lift surface (1) has been shown schematically in the drawings in the form of a small-thickness curved blade, but, keeping the same continuity and form of its upper surface, it could be an element with any cross-section designed to be structurally strong.

In the example of embodiment shown in the figures, the control element (2.2.1) on the trailing edge (2.2) of the secondary lift surface (2) covers a very large fraction of said secondary lift surface (2), preferably 40% to 60% of the chord of the secondary lift surface (2) including the control element (2.2.1), and has the function of suitably controlling the exit area of the channel. In other examples of embodiment, both the length of the secondary lift surface (2) and the fraction occupied by the control device (2.2.1) could be substantially different.

In the example shown in the figures, the plane which contains the propeller (10) of the motorized propulsion element (6, 10) is situated downstream of the leading edge (1.1) of the main lift surface (1).

The propeller discs (10) would be located longitudinally, behind a zone which covers approximately a quarter of the chord of the section of the main lift surface (1), situated closest to the leading edge (1.1), said zone being that where normally a high airflow speed and a minimum pressure occur. Therefore, the plane of the propellers (10) would be situated normally at between 25% and 50% of the chord of the main lift surface (1).

The value of the diameter of each propeller (10), namely the diameter of the propeller disc (10) or the diameter of the blades, would be normally at between 40% and 75% of the length of the chord of the main lift surface (1).

In the example of embodiment of the invention shown in the above figures, the distributed traction is obtained by means of a consecutive series of motorized propulsion elements (6, 10) which are situated in a single row which covers the whole wingspan of the biplane, without the propeller discs (10) overlapping each other.

Therefore, in the example of embodiment, the active high-lift system according to the invention may comprise a set of motorized propulsion elements (6, 10), each of them being composed of a motor (6) and a propeller (10) which are arranged along the wingspan of the biplane covering either the whole of the exposed biplane wing or exclusively a fraction of the wingspan depending on the design of the aircraft for the high-lift system.

The set of motorized propulsion elements (6, 10) may be arranged so as to form one or more rows - overlapping or not overlapping - above the extrados (1.3) of the main lift surface (1) in the direction of the wingspan.

The blades of the propellers (10) are configured to be arranged oriented approximately perpendicular to the direction of advancing movement of the aircraft which incorporates the high-lift system according to the invention.

The value of the distance separating the two lift surfaces (1, 2), or height of the channel, will be normally between 50% and 75% of the diameter of the propellers (10), so that the axes (11) of the motorized propulsion elements (6, 10) may be at a height with respect to the main lift surface (1) different from the height at which the secondary lift surface (2) is situated with respect to the main lift surface (1).

The longitudinal axis (11) of each motorized propulsion element (6, 10) will normally be raised at an angle of between 5 and 10 degrees above the plane of the chords of the main lift surface (1). This assumes that there is slight backwards inclination of the plane containing the blades.

In the example of embodiment shown, the chord of the secondary lift surface (2) forms an acute angle with respect to the chord of the main lift surface (1) so as to try to keep the area of the channel present between the two lift surfaces (1, 2) constant when the rear control element (2.2.1) has zero deflection. In this way the high speed flying condition will require very small deflections of the control element (2.2.1).

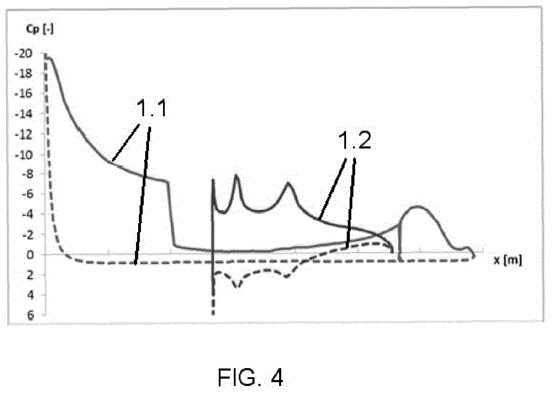

Figure 4 shows the distribution of the pressure coefficient above the surfaces of the biplane elements. The x-axis shows the chord values of the profile and the y-axis shows the pressure coefficient with the negative axis directed upwards. The lines indicated by 1.1 correspond to the distribution of the pressure coefficient above the main lift surface (1), while the lines indicated by 1.2 show the pressure coefficient above the secondary lift surface (2). The solid lines represent the pressure above the extrados or suction side (1.3, 2.3) of the lift surfaces (1, 2), while the broken lines represent the pressure coefficient above the bottom surfaces of the intrados or pressure side (1.4, 2.4) of the lift surfaces (1, 2).

In the example of embodiment shown the lift coefficient is greater than 7.

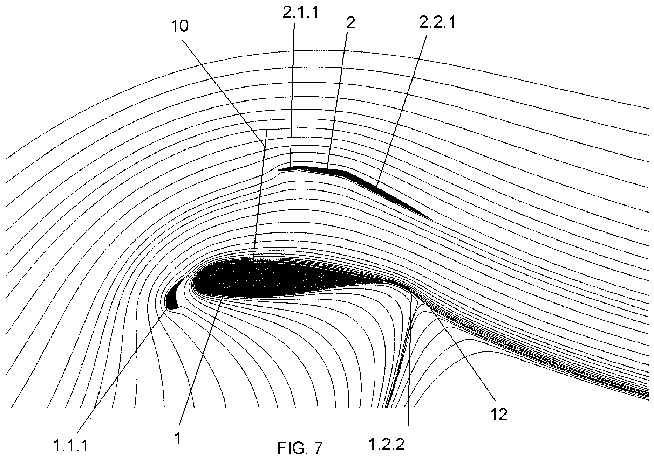

Figure 7 shows a map of the flow lines in a two-dimensional cross-section formed based on the speed vectors calculated at each point of the fluid flow field.

The figure shows the high-lift device (slat) (1.1.1) on the leading edge (1.1) of the main lift surface (1) and the high-lift device (1.2.2) on the trailing edge (1.2), which extends the surface of the extrados (1.3) of the main lift surface (1) with a form which curves gently downwards. The figure shows as well the end (12) of the trailing edge of the high-lift device (1.2.2).

As can be seen from the figures, the secondary lift surface (2) lies immersed within the flow which crosses the propeller plane (10). The deflections of the flow control elements (2.2.1, 2.2.1) of the said surface (2) on the secondary lift surface may be noted.

In the example of embodiment shown, the diameter of the propeller (10) is equal to approximately 65% of the chord of the main lift surface (1), without taking into account the high-lift device (1.2.2) of the trailing edge (1.2). The situation of the secondary lift surface (2) in terms of vertical height with respect to the main lift surface (1) is greater than half the diameter of the propeller (10), i.e. approximately two thirds of the diameter of the propeller (10). The chord of the secondary lift surface (2) is equal to approximately 80% of the chord of the main lift surface (1), without taking into account the high-lift device (1.2.2) of the trailing edge (1.2).

The propulsive and angular configuration and situation with which the fluid flow field was calculated correspond to the maximum lift, which may be deduced from the fact that the front stagnation point has moved towards the end (12) of the trailing edge of the high-lift device (1.2.2) of the trailing edge (1.2).

Any increase in aerodynamic flow from this stagnation point will have the effect that the stagnation point abandons the body moving downstream along the jet which rises through the channel between the lift surfaces (1, 2), this representing a situation of physical instability which would result in the appearance of oscillating forces.

The calculation was performed at 20 m/s and the lift coefficient exceeds the value Cl=17.

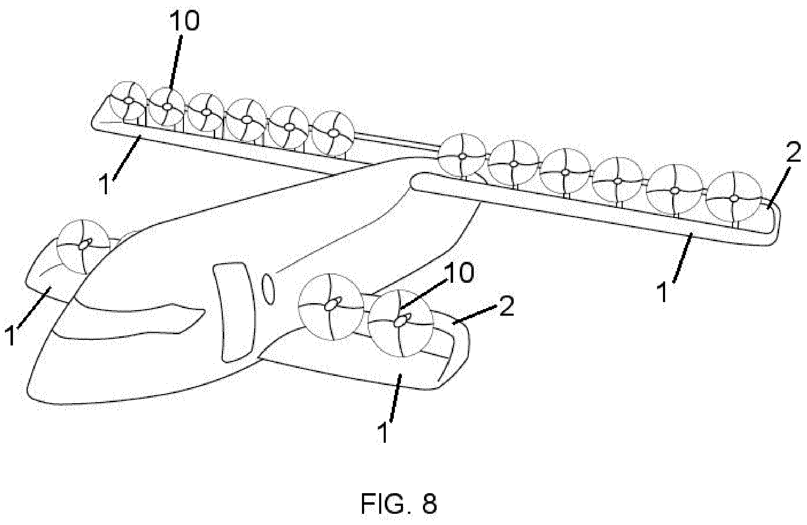

Figure 8 shows a schematic perspective view of an example of embodiment of a short take-off and landing aircraft which comprises an example of embodiment of an active high-lift system.

The aerodynamic configuration of this vehicle consists of two biplane wings arranged in tandem with a different elongation.

It can be seen that it has a total of sixteen motorized propulsion elements (6, 10), four of which are arranged above the front main lift surface (1) of the biplane and twelve above the rear main lift surface (1) of the biplane.

## Claims

1. Active high-lift system for short take-off and landing aircraft, comprising:
- a biplane wing which comprises a main lift surface (1) and a secondary lift surface (2), each one of the lift surfaces (1, 2) comprising a leading edge (1.1, 2.1), a trailing edge (1.2, 2,2), an extrados (1.3, 2.3) and an intrados (1.4, 2.4) and where:
• the extrados (1.3) of the main lift surface (1) is arranged facing the intrados (2.4) of the secondary lift surface (2),
• the main lift surface (1) comprises a high-lift device (1.2.2) located on the trailing edge (1.2) and comprising a surface which is curved towards the intrados (1.4) of said main lift surface (1) along the direction of the chord of the main lift surface (1),
• the secondary lift surface (2) comprises a hinged flow control element (2.2.1) located on the trailing edge (2.2) and adapted to rotate around a hinging axis situated along the direction of the wingspan of the secondary lift surface (2),
- a set of one or more motorized propulsion elements (6, 10), where each motorized propulsion element comprises a motor (6) and a propeller (10) and is situated above the extrados (1.3) of the main lift surface (1), upstream of the leading edge of the secondary lift surface (2) so that the secondary lift surface (2) is configured to be immersed within the wake of the propellers (10),
**characterized in that** each motorized propulsion element (6, 10) is situated downstream of the leading edge (1.1) of the main lift surface (1).

2. Active high-lift system for short take-off and landing aircraft according to Claim 1, **characterized in that** the high-lift device (1.2.2) of the trailing edge (1.2) of the main lift surface (1) is configured to be movable between a first extended position in which it is active and a second position in which it is retracted and inactive.

3. Active high-lift system for short take-off and landing aircraft according to any one of the preceding claims, **characterized in that** the leading edge (1.1) of the main lift surface (1) comprises a form curved towards the intrados (1.4) of the main lift surface (1).

4. Active high-lift system for short take-off and landing aircraft according to any one of the preceding claims, **characterized in that** the main lift surface (1) comprises additionally a high lift device (1.1.1) located on the leading edge (1.1).

5. Active high-lift system for short take-off and landing aircraft according to Claim 4, **characterized in that** the high-lift device (1.1.1) situated on the leading edge (1.1) of the main lift surface (1) is slotted and movable between a first extended position in which a slot is formed between the high-lift device (1.1.1) and the main lift surface (1), said slot connecting the intrados (1.4) and the extrados (1.3), and a second position in which the flow control element (1.1.1) is retracted above the main lift surface (1) and said slot is not present.

6. Active high-lift system for short take-off and landing aircraft according to any one of the preceding claims, **characterized in that** the main lift surface (1) comprises a hinged flow control element (1.2.1) located on the trailing edge (1.2) upstream of the high-lift device (1.2.2) and adapted to rotate around a hinging axis situated along the direction of the wingspan of the main lift surface (1).

7. Active high-lift system for short take-off and landing aircraft according to any one of the preceding claims, **characterized in that** the secondary lift surface (2) comprises a hinged flow control element (2.1.1) located on the leading edge (2.1) and adapted to rotate around a hinging axis located along the direction of the wingspan of the secondary lift surface (2).

8. Active high-lift system for short take-off and landing aircraft according to any one of the preceding claims, **characterized in that** the motorized propulsion elements (6, 10) are distributed along the entire wingspan of the biplane wing or above certain sections thereof, in more or more rows, which may or may not be overlapping, above the extrados (1.3) of the main lift surface (1).

9. Active high lift system for short take-off and landing aircraft according to any one of the preceding claims, **characterized in that** the plane or planes which contain the propellers (10) of the motorized propulsion elements (6, 10) are situated at between 25% and 50% of the chord of the main lift surface (1).

10. Active high-lift system for short take-off and landing aircraft according to any one of the preceding claims, **characterized in that** the diameter of the propellers (10) is equal to approximately between 40% and 75% of the length of the chord of the main lift surface (1).

11. Active high-lift system for short take-off and landing aircraft according to any one of the preceding claims, **characterized in that** the main lift surface (1) and the secondary lift surface (2) are joined together by means of at least one pylon (3).

12. Active high lift system for short take-off and landing aircraft according to Claim 11, **characterized in that** the motorized propulsion elements (6, 10) are joined to the main lift surface (1) or to the secondary lift surface (2), or to both of them (1, 2), by means of pylons (3).

13. Active high lift system for short take-off and landing aircraft according to any one of the preceding claims, **characterized in that** the motor (6) of each motorized propulsion element (6, 10) comprises a longitudinal axis (11), each longitudinal axis (11) and the chord of the main lift surface (1) being configured to form an angle of between 5 degrees and 10 degrees.

14. Short take-off and landing aircraft, **characterized in that** it comprises an active high-lift system for short take-off and landing aircraft according to any one of the preceding claims.

## Patentansprüche

1. Aktives Hochauftriebssystem für kurz startende und landende Luftfahrzeuge, umfassend:
- einen Doppeldeckerflügel, der eine Hauptauftriebsfläche (1) und eine sekundäre Auftriebsfläche (2) aufweist, wobei jede der Auftriebsflächen (1, 2) eine Vorderkante (1.1, 2.1), eine Hinterkante (1.2, 2.2), einen Extrados (1.3, 2.3) und einen intrados (1.4, 2.4) aufweist und wobei:
- das Extrados (1.3) der Hauptauftriebsfläche (1) den intrados (2.4) der sekundären Auftriebsfläche (2) zugewandt angeordnet sind,
- die Hauptauftriebsfläche (1) eine Hochauftriebsvorrichtung (1.2.2) aufweist, die an der Hinterkante (1.2) angeordnet ist und eine Fläche aufweist, die in Richtung des intrados (1.4) der Hauptauftriebsfläche (1) entlang der Richtung der Profilsehne der Hauptauftriebsfläche (1) gebogen ist,
- die sekundäre Auftriebsfläche (2) ein schwenkbares Strömungssteuerungselement (2.2.1) umfasst, das sich an der Hinterkante (2.2) befindet und dazu ausgelegt ist, sich um eine Schwenkachse zu drehen, die sich entlang der Richtung der Flügelspannweite der sekundären Auftriebsfläche (2) befindet,
- einen Satz von einem oder mehreren motorisierten Antriebselementen (6, 10), wobei jedes motorisierte Antriebselement einen Motor (6) und einen Propeller (10) umfasst und oberhalb des Extrados (1.3) der Hauptauftriebsfläche (1) stromaufwärts der Vorderkante der sekundären Auftriebsfläche (2) angeordnet ist, so dass die sekundäre Auftriebsfläche (2) so konfiguriert ist, dass sie in den Nachlauf der Propeller (10) eingetaucht wird, **dadurch gekennzeichnet, dass** jedes motorisierte Antriebselement (6, 10) stromabwärts der Vorderkante (1.1) der Hauptauftriebsfläche (1) angeordnet ist.

2. Aktives Hochauftriebssystem für kurz startende und landende Luftfahrzeuge nach Anspruch 1, **dadurch gekennzeichnet, dass** die Hochauftriebsvorrichtung (1.2.2) der Hinterkante (1.2) der Hauptauftriebsfläche (1) zwischen einer ersten ausgefahrenen Position, in der sie aktiv ist, und einer zweiten Position, in der sie eingefahren und inaktiv ist, beweglich gestaltet ist.

3. Aktives Hochauftriebssystem für kurz startende und landende Luftfahrzeuge nach einem der vorhergehenden Ansprüche, **dadurch gekennzeichnet, dass** die Vorderkante (1.1) der Hauptauftriebsfläche (1) eine zum intrados (1.4) der Hauptauftriebsfläche (1) gekrümmte Form aufweist.

4. Aktives Hochauftriebssystem für kurz startende und landende Luftfahrzeuge nach einem der vorhergehenden Ansprüche, **dadurch gekennzeichnet, dass** die Hauptauftriebsfläche (1) zusätzlich eine an der Vorderkante (1.1) angeordnete Hochauftriebseinrichtung (1.1.1) aufweist.

5. Aktives Hochauftriebssystem für kurz startende und landende Luftfahrzeuge nach Anspruch 4, **dadurch gekennzeichnet, dass** die an der Vorderkante (1.1) der Hauptauftriebsfläche (1) angeordnete Hochauftriebsvorrichtung (1.1.1) geschlitzt ist und zwischen einer ersten ausgefahrenen Position, in der ein Schlitz zwischen der Hochauftriebsvorrichtung (1. 1.1) und der Hauptauftriebsfläche (1) gebildet ist, wobei der Schlitz den intrados (1.4) und den Extrados (1.3) verbindet, und einer zweiten Position, in der das Strömungssteuerungselement (1.1.1) über die Hauptauftriebsfläche (1) zurückgezogen ist und der Schlitz nicht vorhanden ist.

6. Aktives Hochauftriebssystem für kurz startende und landende Luftfahrzeuge nach einem der vorhergehenden Ansprüche, **dadurch gekennzeichnet, dass** die Hauptauftriebsfläche (1) ein schwenkbares Strömungssteuerungselement (1.2.1) aufweist, das an der Hinterkante (1.2) stromaufwärts der Hochauftriebsvorrichtung (1.2.2) angeordnet und um eine in Richtung der Spannweite der Hauptauftriebsfläche (1) liegende Schwenkachse drehbar ausgeführt ist.

7. Aktives Hochauftriebssystem für kurz startende und landende Luftfahrzeuge nach einem der vorhergehenden Ansprüche, **dadurch gekennzeichnet, dass** die sekundäre Auftriebsfläche (2) ein schwenkbares Strömungssteuerungselement (2.1.1) aufweist, das an der Vorderkante (2.1) angeordnet und um eine in Richtung der Spannweite der sekundären Auftriebsfläche (2) liegende Schwenkachse drehbar ausgeführt ist.

8. Aktives Hochauftriebssystem für kurz startende und landende Luftfahrzeuge nach einem der vorhergehenden Ansprüche, **dadurch gekennzeichnet, dass** die motorisierten Antriebselemente (6, 10) über die gesamte Spannweite des Doppeldeckerflügels oder über bestimmte Abschnitte desselben verteilt sind, und zwar in mehreren Reihen, die sich überlappen können oder auch nicht, über den Extrados (1.3) der Hauptauftriebsfläche (1).

9. Aktives Hochauftriebssystem für kurz startende und landende Luftfahrzeuge nach einem der vorhergehenden Ansprüche, **dadurch gekennzeichnet, dass** die Ebene bzw. die Ebenen, die die Propeller (10) der motorisierten Antriebselemente (6, 10) enthalten, zwischen 25 % und 50 % der Profilsehne der Hauptauftriebsfläche (1) liegen.

10. Aktives Hochauftriebssystem für kurz startende und landende Luftfahrzeuge nach einem der vorhergehenden Ansprüche, **dadurch gekennzeichnet, dass** der Durchmesser der Propeller (10) etwa zwischen 40 % und 75 % der Länge der Profilsehne der Hauptauftriebsfläche (1) beträgt.

11. Aktives Hochauftriebssystem für kurz startende und landende Luftfahrzeuge nach einem der vorhergehenden Ansprüche, **dadurch gekennzeichnet, dass** die Hauptauftriebsfläche (1) und die sekundäre Auftriebsfläche (2) mittels mindestens eines Pylons (3) miteinander verbunden sind.

12. Aktives Hochauftriebssystem für kurz startende und landende Luftfahrzeuge nach Anspruch 11, **dadurch gekennzeichnet, dass** die motorisierten Antriebselemente (6, 10) mit der Hauptauftriebsfläche (1) oder mit der sekundären Auftriebsfläche (2), oder mit beiden (1, 2), mittels Pylonen (3) verbunden sind.

13. Aktives Hochauftriebssystem für kurz startende und landende Luftfahrzeuge nach einem der vorhergehenden Ansprüche, **dadurch gekennzeichnet, dass** der Motor (6) jedes motorisierten Antriebselements (6, 10) eine Längsachse (11) aufweist, wobei jede Längsachse (11) und die Profilsehne der Hauptauftriebsfläche (1) so gestaltet sind, dass sie einen Winkel zwischen 5 Grad und 10 Grad bilden.

14. Kurz startendes und landendes Luftfahrzeug, **dadurch gekennzeichnet, dass** es ein aktives Hochauftriebssystem für kurz startende und landende Luftfahrzeuge nach einem der vorhergehenden Ansprüche umfasst.

## Revendications

1. Système actif de portance élevée pour les avions à décollage et atterrissage courts, comprenant :
- une aile biplan qui comprend une surface de levage principale (1) et une surface de levage secondaire (2), chacune des surfaces de levage (1, 2) comprenant un bord d'attaque (1.1, 2.1), un bord de fuite (1.2, 2,2), un extrados (1.3, 2.3) et un intrados (1.4, 2.4) et où :
- l'extrados (1.3) de la surface de levage principale (1) est disposé face à l'intrados (2.4) de la surface de levage secondaire (2),
- la surface de levage principale (1) comprend un dispositif de levage élevé (1.2.2) situé sur le bord de fuite (1.2) et comprenant une surface qui est incurvée vers l'intrados (1.4) de ladite surface de levage principale (1) le long de la direction de la corde de la surface de levage principale (1),
- la surface de levage secondaire (2) comprend un élément de commande d'écoulement articulé (2.2.1) situé sur le bord de fuite (2.2) et adapté pour tourner autour d'un axe d'articulation situé le long de la direction de l'envergure de la surface de levage secondaire (2),
- un ensemble d'un ou plusieurs éléments de propulsion motorisés (6, 10), dans lequel chaque élément de propulsion motorisé comprend un moteur (6) et une hélice (10) et est situé au-dessus de l'extrados (1.3) de la surface de levage principale (1), en amont du bord d'attaque de la surface de levage secondaire (2) de sorte que la surface de levage secondaire (2) est configurée pour être immergée dans le sillage des hélices (^{1°}), **caractérisé en ce que** chaque élément de propulsion motorisé (6, 10) est situé en aval du bord d'attaque (1.1) de la surface de levage principale (1).

2. Système actif de portance élevée pour avion à décollage et atterrissage courts selon la revendication 1, **caractérisé en ce que** le dispositif de portance élevée (1.2.2) du bord de fuite (1.2) de la surface de portance principale (1) est configuré pour être mobile entre une première position étendue dans laquelle il est actif et une seconde position dans laquelle il est rétracté et inactif.

3. Système actif de portance élevée pour avion à décollage et atterrissage courts selon l'une quelconque des revendications précédentes, **caractérisé en ce que** le bord d'attaque (1.1) de la surface de portance principale (1) comprend une forme incurvée vers l'intrados (1.4) de la surface de portance principale (1)

4. Système actif de portance élevée pour avion à décollage et atterrissage courts selon l'une quelconque des revendications précédentes, **caractérisé en ce que** la surface de portance principale (1) comprend en outre un dispositif de portance élevée (1.1.1) situé sur le bord d'attaque (1.1).

5. Système actif de portance élevée pour un avion à décollage et atterrissage courts selon la revendication 4, **caractérisé en ce que** le dispositif de portance élevée (1.1.1) situé sur le bord d'attaque (1.1) de la surface de portance principale (1) est fendu et mobile entre une première position étendue dans laquelle une fente est formée entre le dispositif de portance élevée (1.1.1) et la surface de portance principale (1), ladite fente reliant l'intrados (1.4) et l'extrados (1.3), et une seconde position dans laquelle l'élément de commande d'écoulement (1.1.1)est rétracté au-dessus de la surface de portance principale (1) et ladite fente n'est pas présente.

6. Système actif de portance élevée pour avion à décollage et atterrissage courts selon l'une quelconque des revendications précédentes, **caractérisé en ce que** la surface de portance principale (1) comprend un élément de commande d'écoulement articulé (1.2.1) situé sur le bord de fuite (1.2) en amont du dispositif de portance élevé (1.2.2) et adapté pour tourner autour d'un axe d'articulation situé le long de la direction de l'envergure de la surface de portance principale (1).

7. Système actif de portance élevée pour avion à décollage et atterrissage courts selon l'une quelconque des revendications précédentes, **caractérisé en ce que** la surface de portance secondaire (2) comprend un élément de commande d'écoulement articulé (2.1.1) situé sur le bord d'attaque (2.1) et adapté pour tourner autour d'un axe d'articulation situé le long de la direction de l'envergure de la surface de portance secondaire (2).

8. Système actif de portance élevée pour avions à décollage et atterrissage courts selon l'une quelconque des revendications précédentes, **caractérisé en ce que** les éléments motorisés de propulsion (6, 10) sont répartis le long de toute l'envergure de l'aile biplan ou au-dessus de certaines sections de celle-ci, en plus ou plus de rangées, qui peuvent ou non se chevaucher, au-dessus de l'extrados (1.3) de la surface de portance principale (1).

9. Système actif de portance élevée pour avion à décollage et atterrissage courts selon l'une quelconque des revendications précédentes, **caractérisé en ce que** le ou les plans qui contiennent les hélices (10) des éléments de propulsion motorisés (6, 10) sont situés entre 25 % et 50 % de la corde de la surface de portance principale (1).

10. Système actif de portance élevée pour avion à décollage et atterrissage courts selon l'une quelconque des revendications précédentes, **caractérisé en ce que** le diamètre des hélices (10) est égal à environ 40 % à 75 % de la longueur de la corde de la surface de portance principale (1)

11. Système actif de portance élevée pour avion à décollage et atterrissage courts selon l'une quelconque des revendications précédentes, **caractérisé en ce que** la surface de portance principale (1) et la surface de portance secondaire (2) sont reliées l'une à l'autre au moyen d'au moins un pylône (3).

12. Système actif de portance élevée pour avions de décollage et d'atterrissage courts selon la revendication 11, **caractérisé en ce que** les éléments de propulsion motorisés (6, 10) sont reliés à la surface de portance principale (1) ou à la surface de portance secondaire (2), ou aux deux à la fois (1, 2), au moyen de pylônes (3).

13. Système actif de portance élevée pour avion à décollage et atterrissage courts selon l'une quelconque des revendications précédentes, **caractérisé en ce que** le moteur (6) de chaque élément de propulsion motorisé (6, 10) comprend un axe longitudinal (11), chaque axe longitudinal (11) et la corde de la surface de portance principale (1) étant configurés pour former un angle compris entre 5 degrés et 10 degrés.

14. Avion à décollage et atterrissage courts, **caractérisé en ce qu'**il comprend un système actif de portance élevée pour avion à décollage et atterrissage courts selon l'une quelconque des revendications précédentes.
